(19) Europäisches Patentamt / European Patent Office / Office européen des brevets

(11) **EP 4 321 571 A1**

(12) **EUROPEAN PATENT APPLICATION**
published in accordance with Art. 153(4) EPC

(43) Date of publication:
**14.02.2024 Bulletin 2024/07**

(21) Application number: **22784413.1**

(22) Date of filing: **10.03.2022**

(51) International Patent Classification (IPC):
**C08K 5/09** (2006.01)   **C08L 23/04** (2006.01)
**C08K 3/013** (2018.01)

(52) Cooperative Patent Classification (CPC):
**C08K 3/013; C08K 3/26; C08K 5/09; C08K 5/098;
C08L 23/04**

(86) International application number:
**PCT/JP2022/010558**

(87) International publication number:
**WO 2022/215428 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.04.2021   JP 2021064235**

(71) Applicant: **TBM Co., Ltd.
Tokyo 100-0006 (JP)**

(72) Inventor: **NIIKURA, Hiroyuki
Tokyo 100-0006 (JP)**

(74) Representative: **Dennemeyer & Associates S.A.
Postfach 70 04 25
81304 München (DE)**

(54) **RESIN COMPOSITION AND MOLDED ARTICLE**

(57)     An object of the present invention is to provide a resin composition having reduced deterioration in molding processability. The present invention provides a resin composition including polyethylene-based resin, an inorganic substance powder, zinc stearate, and stearic acid in predetermined ratios.

EP 4 321 571 A1

**Description**

Field

The present invention relates to a resin composition and a molded product.

Background

Polyethylene-based resins are widely used as materials for molded products and the like due to excellent mechanical and other properties of the polyethylene-based resins.
From the viewpoint of providing various properties to the polyethylene-based resins, blending inorganic substance powders and various additives together with the polyethylene-based resins has been developed (for example, Patent Literatures 1 and 2).

Citation List

Patent Literature

Patent Literature 1: Japanese Patent Application Laid-open No. 2001-200108
Patent Literature 2: Japanese Patent Application Laid-open No. 2002-20556

Summary

Technical Problem

The inventor of the present invention, however, has found that although the resin compositions blended with the various components as described above can provide target properties to the polyethylene-based resins, molding processability may deteriorate. Low molding processability of the resin composition also causes the appearance of the obtained molded product to deteriorate.
The present invention was made in view of the above circumstances, and an object of the present invention is to provide a resin composition having reduced deterioration in the molding processability.

Solution to Problem

The inventor of the present invention has found that the above problem can be solved by blending respective predetermined amounts of the inorganic substance powder, zinc stearate, and stearic acid together with the polyethylene-based resin. Consequently, the inventor of the present invention has attained the present invention. More specifically, the present invention provides the followings.

(1) A resin composition comprising:

a polyethylene-based resin, an inorganic substance powder, zinc stearate, and stearic acid, in which
a mass ratio of the polyethylene-based resin and the inorganic substance powder is 10:90 to 90:10;
a content of the zinc stearate is 0.05% by mass or more and 0.60% by mass or less relative to the resin composition;
a content of the stearic acid is 0.10% by mass or more and 1.20% by mass or less relative to the resin composition; and
a mass ratio of the zinc stearate and the stearic acid is 1:1.5 to 1:4.

(2) The resin composition as described in (1), in which the polyethylene-based resin comprises

high-density polyethylene having an MFR (190°C, 21.6 kg) in accordance with JIS K 6922-1 (ISO 1133) of 5 g/10 min or more and 15 g/10 min or less; and
linear low-density polyethylene having an MFR (190°C, 2.16 kg) in accordance with JIS K 6922-1 (ISO 1133) of 0.5 g/10 min or more and 1.5 g/10 min or less; and
a mass ratio of the high-density polyethylene and the linear low-density polyethylene is 92.5:7.5 to 99.5:0.5.

(3) The resin composition as described in (1) or (2), further comprising polyethylene-based wax in an amount of 0.15% by mass or more and 1.80% by mass or less relative to the resin composition.

(4) The resin composition as described in any one of (1) to (3), in which the inorganic substance powder is heavy calcium carbonate.

(5) The resin composition as described in (4), in which an average particle diameter of the heavy calcium carbonate is 0.7 $\mu$m or more and 6.0 um or less.

(6) A molded product obtained from the resin composition as described in any one of (1) to (5).

(7) The molded product as described in (6), in which the molded product is an inflation-molded product.

(8) The molded product as described in (6), in which the molded product is an extrusion-molded product.

The present invention also incorporates the following inventions.

<1> A resin composition comprising:

a polyethylene-based resin, an inorganic substance powder, zinc stearate, stearic acid, and polyethylene-based wax in which

a mass ratio of the polyethylene-based resin and the inorganic substance powder is 10:90 to 90:10;

a content of the zinc stearate is 0.05% by mass or more and 0.60% by mass or less relative to the resin composition;

a content of the stearic acid is 0.10% by mass or more and 1.20% by mass or less relative to the resin composition;

a mass ratio of the zinc stearate and the stearic acid is 1:2.2 to 1:4; and

a content of the polyethylene-based wax is 0.15% by mass or more and 1.80% by mass or less relative to the resin composition.

<2> The resin composition as described in <1>, in which the polyethylene-based resin comprises

high-density polyethylene having an MFR (190°C, 21.6 kg) in accordance with JIS K 6922-1 (ISO 1133) of 5 g/10 min or more and 15 g/10 min or less; and

linear low-density polyethylene having an MFR (190°C, 2.16 kg) in accordance with JIS K 6922-1 (ISO 1133) of 0.5 g/10 min or more and 1.5 g/10 min or less; and

a mass ratio of the high-density polyethylene and the linear low-density polyethylene is 92.5:7.5 to 99.5:0.5.

<3> The resin composition as described in <1> or <2>, in which the inorganic substance powder is heavy calcium carbonate.

<4> The resin composition as described in <3>, in which an average particle diameter of the heavy calcium carbonate is 0.7 um or more and 6.0 um or less.

<5> A molded product obtained from the resin composition as described in any one of <1> to <4>.

<6> The molded product as described in <5>, in which the molded product is an inflation-molded product.

<7> The molded product as described in <5>, wherein the molded product is an extrusion-molded product.

Advantageous Effects of Invention

According to the present invention, a resin composition having reduced deterioration in molding processability can be provided.

Description of Embodiments

Hereinafter, embodiments of the present invention will be described. The present invention, however, is not limited to these embodiments.

<Resin composition>

The resin composition according to the present invention includes a polyethylene-based resin, an inorganic substance powder, zinc stearate, and stearic acid, and satisfies all of the following requirements.

(Requirement 1) The mass ratio of the polyethylene-based resin to the inorganic substance powder is Polyethylene-based resin:Inorganic substance powder = 10:90 to 90:10.

(Requirement 2) The content of zinc stearate is 0.05% by mass or more and 0.60% by mass or less relative to the resin composition.
(Requirement 3) The content of stearic acid is 0.10% by mass or more and 1.20% by mass or less relative to the resin composition.
(Requirement 4) The mass ratio of zinc stearate to stearic acid is Zinc stearate:Stearic acid = 1:1.5 to 1:4.

From the viewpoint of satisfying the requirements for weight reduction of polyethylene-based resin products and reduction in the amounts of used resins, for example, blending the polyethylene-based resin with the inorganic substance powder (for example, calcium carbonate) so as to satisfy (Requirement 1) has been known.

On the other hand, the inventor of the present invention has found that the composition that satisfies (Requirement 1) may significantly deteriorate the excellent molding processability that the polyethylene-based resin has.

As a result of further study conducted by the inventor of the present invention, the inventor of the present invention has found that blending zinc stearate and stearic acid (octadecanoic acid) together with the polyethylene-based resin and the inorganic substance powder so as to satisfy (Requirements 2) to (Requirement 4) allows the deterioration in the molding processability to be reduced.

Zinc stearate has been known to act as a lubricant. In addition, stearic acid has been known to act as a dispersing agent.

The effect provided by the combination of the zinc stearate and stearic acid was not capable of being confirmed even when other components known as lubricants and dispersing agents are blended together with the polyethylene-based resin.

Even in the case where zinc stearate and stearic acid were combined, a sufficient effect was difficult to obtain unless (Requirement 2) to (Requirement 4) were satisfied.

The inventor of the present invention also has found that such an effect of reducing deterioration in the molding processability can be improved in the case where the polyethylene-based resin was a mixture of high-density polyethylene and linear low-density polyethylene or in the case where polyethylene-based wax is further blended.

In the present invention, the term "molding processability" means the ease of processing when the resin composition is molded by any molding methods.

For example, in the case of inflation molding of the resin composition, the molding processability incorporates the ease of blowing.

For example, in the case of extrusion molding of the resin composition, the molding processability incorporates the ease of extrusion from a die.

According to the present invention, the deterioration in the molding processability of the resin composition can be reduced, and as a result, the deterioration in the appearance of the obtained molded product can also be reduced.

The appearance of the molded product can be evaluated, for example, by visual observation of the surface conditions (for example, smoothness) of the molded product.

Hereinafter, the constitution of the resin composition according to the present invention will be described.

(Polyethylene-based resin)

The polyethylene-based resin in the present invention is not particularly limited as long as at least a part of the resin contains methylene repeating units.

For example, the polyethylene-based resin in the present invention incorporates resins having ethylene component units of 50% by mass or more.

The polyethylene-based resin may be used singly or may be used in combination of two or more of the polyethylene-based resins.

The origin of the polyethylene-based resin is not particularly limited. The polyethylene-based resin may be synthesized resins, resins produced from plant-derived raw materials, or the like.

As the polyethylene-based resin, the followings may be exemplified.

High-density polyethylene (HDPE): Polyethylene having a density of 0.942 $g/cm^3$ or more
Medium density polyethylene: Polyethylene having a density of 0.930 $g/cm^3$ or more and less than 0.942 $g/cm^3$
Low-density polyethylene (LDPE): Polyethylene having a density of 0.910 $g/cm^3$ or more and less than 0.930 $g/cm^3$
Linear low-density polyethylene (LLDPE): Linear polyethylene having a density of 0.911$g/cm^3$ or more and less than 0.940$g/cm^3$
Ultra-low-density polyethylene (ULDPE): Polyethylene having a density of less than 0.910 $g/cm^3$

The polyethylene-based resin in the present invention also incorporates functional group-containing polyethylene-based resins (such as ethylene-vinyl acetate copolymers, ethylene-acrylic acid copolymers, ethylene-methacrylic acid copolymers, metal salts of ethylene-methacrylic acid copolymers (ionomers), ethylene-acrylic acid alkyl ester copolymers, ethylene-methacrylic acid alkyl ester copolymers, and maleic acid-modified polyethylene).

From the viewpoint of easily exhibiting the effect of the present invention, the polyethylene-based resin preferably includes either or both of the followings, and more preferably includes both. Here, "MFR" is an abbreviation for "melt mass flow rate".

High-density polyethylene having an MFR (190°C, 21.6 kg) of 5 g/10 min or more and 15 g/10 min or less in accordance with JIS K 6922-1 (ISO 1133)

Linear low-density polyethylene having an MFR (190°C, 2.16 kg) of 0.5 g/10 min or more and 1.5 g/10 min or less in accordance with JIS K 6922-1 (ISO 1133)

In the case where the resin composition according to the present invention includes both of the high-density polyethylene and the linear low-density polyethylene that satisfy the above MFR, the mass ratio of these polyethylenes (High-density polyethylene:Linear low-density polyethylene) is preferably 92.5:7.5 to 99.5:0.5 and more preferably 94.0:6.0 to 98.0:2.0.

(Inorganic substance powder)

The inorganic substance powders in the present invention incorporates any components that can be blended together with the resin and, for example, components known as fillers may be suitably used.

The inorganic substance powder may be used alone or in combination of two or more of the inorganic substance powders.

The inorganic substance powder incorporates both synthesized powders and natural mineral-derived powders (such as crushed minerals).

Examples of the inorganic substance powder include powders of salts (such as carbonates, sulfates, silicates, phosphates, and borates), oxides, or hydrates of metals (such as calcium, magnesium, aluminum, titanium, iron, and zinc).

Specific examples of the inorganic substance powder include powders of calcium carbonate, magnesium carbonate, zinc oxide, titanium oxide, silica, alumina, clay, talc, kaolin, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, carbon black, zeolite, molybdenum, diatomaceous earth, sericite, shirasu, calcium sulfite, sodium sulfate, potassium titanate, bentonite, wollastonite, dolomite, and graphite.

The shape of the inorganic substance powder is not particularly limited and may be in the form of any of particles (a spheric shape, an irregular shape, or the like), flakes, granules, fibers, and the like.

The lower limit of the particle diameter of the inorganic substance powder is not particularly limited, but the average particle diameter is preferably 0.7 um or more and more preferably 1.0 um or more.

The upper limit of the particle diameter of the inorganic substance powder is not particularly limited, but the average particle diameter is preferably 6.0 um or less and more preferably 5.0 um or less.

In the present invention, the term "average particle diameter" means a value calculated from the measurement result of a specific surface area by an air permeation method in accordance with JIS M-8511.

As a measuring instrument for the average particle diameter, for example, a specific surface area measuring apparatus Type SS-100 manufactured by Shimadzu Corporation can be preferably used.

[Heavy calcium carbonate]

The inorganic substance powder in the present invention preferably includes heavy calcium carbonate and is more preferably composed of heavy calcium carbonate.

The term "heavy calcium carbonate" in the present invention refers to a product obtained by, for example, mechanically crushing natural calcium carbonate and is clearly distinguished from synthetic calcium carbonate (that is, light calcium carbonate) produced by chemical precipitation reaction or the like.

Heavy calcium carbonate includes particles having a wide range of particle diameters and is generally known to have deteriorated molding processability.

According to the present invention, however, even a resin composition including heavy calcium carbonate can have excellent molding processability and excellent appearance of the molded product.

Heavy calcium carbonate can be obtained by crushing and classifying natural calcium carbonate such as calcite (for example, limestone, chalk, and marble), shell, and coral.

As the crushing method in the method for producing heavy calcium carbonate, either a wet method or a dry method may be adopted. The dry crashing without the steps such as a dehydration step and a drying step is preferable from the economical viewpoint.

A crusher used for crashing heavy calcium carbonate is not particularly limited. Examples include an impact crusher, a crusher using a crushing medium (such as a ball mill), and a roller mill.

As the classification method in the method for producing heavy calcium carbonate, conventionally known means such as air classification, wet cyclone, decanter, and the like may be adopted.

Heavy calcium carbonate may be subjected to surface treatment or may not be subjected to surface treatment. The surface treatment can be performed at any point of time (for example, before crushing, during crushing, before classifying, and after classifying) in the method for producing heavy calcium carbonate.

As the method for treating the surface of heavy calcium carbonate, physical methods (plasma treatment and the like) and chemical methods (a method using a coupling agent, a surfactant, or the like) may be adopted.

Of the surface treatment of heavy calcium carbonate, examples of coupling agents used in the chemical methods include silane coupling agents and titanium coupling agents.

Of the surface treatment of heavy calcium carbonate, examples of surfactants used in the chemical methods include anionic surfactants, cationic surfactants, nonionic surfactants, and amphoteric surfactants. More specifically, examples include higher fatty acids, higher fatty acid esters, higher fatty acid amides, and higher fatty acid salts.

Subjecting heavy calcium carbonate to the surface treatment as described above allows the dispersibility and the like of heavy calcium carbonate to be improved.

Heavy calcium carbonate without surface treatment, however, is preferable in that this heavy calcium carbonate can reduce the risk of odor generation due to thermal decomposition of the surface treatment agent at the time of molding.

The form of heavy calcium carbonate is not particularly limited. From the viewpoint of excellent dispersibility in the resin composition, the form is preferably a particle form.

In the case where heavy calcium carbonate is in the particle form, the average particle diameter of the heavy calcium carbonate is preferably 0.7 $\mu$m or more and 6.0 $\mu$m or less, more preferably 1.0 um or more and 5.0 $\mu$m or less, and further preferably 1.5 $\mu$m or more and 3.0 um or less.

The heavy calcium carbonate having the average particle diameter within the above range allows dispersibility in the resin composition to be excellent and excessive viscosity increase in the resin composition to be prevented. The heavy calcium carbonate more easily exhibits the effects of the present invention because the heavy calcium carbonate is less likely to protrude and drop from the surface of molded products obtained from the resin composition or less likely to impair the surface properties, mechanical strength, and the like.

In the case where heavy calcium carbonate is in the particle form, particles having a particle diameter of 45 um or more are preferably excluded in the particle diameter distribution.

In the case where heavy calcium carbonate is in the particle form, the irregularity of heavy calcium carbonate can be represented by a degree of spheronization of the shape, that is, a roundness. Lower roundness means higher irregularity.

In the case where heavy calcium carbonate is in the particle form, the roundness of the heavy calcium carbonate is preferably 0.50 or more and 0.95 or less, more preferably 0.55 or more and 0.93 or less, and further preferably 0.60 or more and 0.90 or less.

In the present invention, the term "roundness" means a value obtained by dividing the projected area of particle by the area of a circle having the same perimeter as the projected perimeter of the particle (Projected area of particle)/(Area of a circle having the same perimeter as projected perimeter of particle).

A method for measuring the roundness is not particularly limited. For example, the roundness can be specified by analyzing the projection image of particles obtained by a scanning microscope, a stereomicroscope, or the like using commercially available image analysis software.

Specifically, the roundness can be calculated by the following formula based on the measurement results of the projected area of the particle (A), the area of the circle having the same perimeter as the projected perimeter of the particle (B), the radius of the circle having the same perimeter as the projected perimeter of the particle (r), and the projected perimeter of the particle (PM).

$$\text{"Roundness"} = A/B = A/\pi r^2 = A \times 4\pi/(PM)^2$$

(Zinc stearate and stearic acid)

As long as zinc stearate (CAS registration number: 557-05-1) and stearic acid (octadecanoic acid, CAS registration number: 57-11-4) can be blended in the resin compositions so as to satisfy the requirements of the present invention, the form and other properties are not particularly limited.

(Composition of resin composition)

The composition of the resin composition according to the present invention is not particularly limited except that the resin composition satisfies all of the following four requirements.

(Requirement 1) The mass ratio of the polyethylene-based resin to the inorganic substance powder is Polyethylene-based resin:Inorganic substance powder = 10:90 to 90:10.

(Requirement 2) The content of zinc stearate is 0.05% by mass or more and 0.60% by mass or less relative to the resin composition.

(Requirement 3) The content of stearic acid is 0.10% by mass or more and 1.20% by mass or less relative to the resin composition.

(Requirement 4) The mass ratio of zinc stearate to stearic acid is Zinc stearate:Stearic acid = 1:1.5 to 1:4.

With respect to (Requirement 1), in the resin composition according to the present invention, the mass ratio of the polyethylene-based resin to the inorganic substance powder (Polyethylene-based resin:Inorganic substance powder) is preferably 30:70 to 80:20 and more preferably 50:50 to 70:30.

The upper limit of the polyethylene-based resin content is preferably 80% by mass or less and more preferably 70% by mass or less relative to the resin composition.

The lower limit of the polyethylene-based resin content is preferably 30% by mass or more and more preferably 50% by mass or more relative to the resin composition.

The upper limit of the inorganic substance powder content is preferably 70% by mass or less and more preferably 50% by mass or less relative to the resin composition.

The lower limit of the inorganic substance powder content is preferably 20% by mass or more and more preferably 30% by mass or more relative to the resin composition.

With respect to (Requirement 2), the lower limit of the zinc stearate content is preferably 0.10% by mass or more and more preferably 0.15% by mass or more relative to the resin composition.

With respect to (Requirement 2), the upper limit of the content of zinc stearate is preferably 0.55% by mass or less and more preferably 0.50% by mass or less relative to the resin composition.

With respect to (Requirement 3), the lower limit of the stearic acid content is preferably 0.15% by mass or more and more preferably 0.20% by mass or more relative to the resin composition.

With respect to (Requirement 3), the upper limit of the content of stearic acid is preferably 1.15 mass% or less and more preferably 1.10% or less relative to the resin composition.

With respect to (Requirement 4), in the resin composition according to the present invention, the mass ratio of zinc stearate to stearic acid (Zinc stearate:Stearic acid) is preferably 1:2.2 to 1:4, preferably 1:2 to 1:3.5, preferably 1:2.2 to 1:3.5, and more preferably 1:2.2 to 1:3.3.

(Other components in resin composition)

In addition to the components described above, the resin composition according to the present invention can further include optional components to the extent that the optional components do not impair the effects of the present invention. Such components can be used singly or in combination of two or more of the components. The kind and amount of such components may be appropriately set depending on, for example, the effect to be obtained.

Examples of the components that may be included in the resin composition include lubricants (other than zinc stearate), dispersing agents (other than stearic acid), plasticizers, resins other than the polyethylene-based resins, colorants, antioxidants, flame retardants, and foaming agents.

[Lubricants]

As the lubricants, any lubricants that may be blended in the resin composition may be used. Examples include polyethylene-based wax (such as polyethylene wax), paraffin wax, sorbitan esters, glycerin esters, magnesium stearate, and stearamide.

As a result of study conducted by the inventor of the present invention, the inventor of the present invention has found that, of the lubricants, polyethylene-based wax is particularly likely to improve the effect of the present invention provided by zinc stearate and stearic acid.

The lower limit of the polyethylene-based wax content is preferably 0.15% by mass or more and more preferably 0.20% by mass or more relative to the resin composition.

The upper limit of the polyethylene-based wax content is preferably 1.80% by mass or less and more preferably 1.50% by mass or less relative to the resin composition.

[Dispersing agents]

Examples of the dispersing agents include sodium polyacrylate, polyglycerin fatty acid esters, and sorbitan fatty acid esters.

[Plasticizers]

Examples of the plasticizers include acetyltributyl citrate, triethyl citrate, acetyltriethyl citrate, dibutyl phthalate, diaryl phthalates, dimethyl phthalate, diethyl phthalate, di-2-methoxyethyl phthalate, dibutyl tartrate, o-benzoyl benzoate, diacetin, and epoxidized soybean oil.

[Resins other than polyethylene-based resins]

With respect to resins other than the polyethylene-based resins include:

Polyolefin-based resins such as polypropylene-based resins, polymethyl-1-pentene, and ethylene-cyclic olefin copolymers;
Polyamide-based resins such as nylon-6, nylon-6,6, nylon-6,10, and nylon-6,12;
Aromatic polyester-based resins such as polyethylene terephthalate and its copolymers, polyethylene naphthalate, and polybutylene terephthalate;
Polystyrene-based resins such as atactic polystyrene, syndiotactic polystyrene, acrylonitrile-styrene (AS) copolymers, and acrylonitrile-butadiene-styrene (ABS) copolymers;
Polyvinyl chloride-based resins such as polyvinyl chloride and polyvinylidene chloride;
Polyphenylene sulfide; and
Polyether-based resins such as polyethersulfone, polyether ketone, and polyether ether ketone.

From the viewpoint of easily exhibiting the effects of the present invention, however, the resins other than the polyethylene-based resin is preferably not included or, if included, the amount is preferably small (for example, the amount is 1.0% by mass or less relative to the resin composition).

As the colorants, any of the known organic pigments, inorganic pigments, and dyes can be used.

Examples of the organic pigments include azo, anthraquinone, phthalocyanine, quinacridone, isoindolinone, dioxazine, perinone, quinophthalone, and perylene pigments.

Examples of the inorganic pigments include ultramarine blue, titanium oxide, titanium yellow, iron oxide (red iron oxide), chromium oxide, zinc oxide, and carbon black.

Examples of the antioxidants include phosphorus-based antioxidants, phenol-based antioxidants, and pentaerythritol-based antioxidants.

Examples of the flame retardants include halogen-based flame retardants, phosphorus-based flame retardants, and non-phosphorus-halogen-based flame retardants such as metal hydrates.

Examples of the foaming agent include aliphatic hydrocarbons (such as propane, butane, pentane, hexane, and heptane), alicyclic hydrocarbons (such as cyclobutane, cyclopentane, and cyclohexane), halogenated hydrocarbons (such as chlorodifluoromethane, difluoromethane, trifluoromethane, trichlorofluoromethane, dichloromethane, dichlorofluoromethane, dichlorodifluoromethane, chloromethane, chloroethane, dichlorotrifluoroethane, dichloropentafluoroethane, tetrafluoroethane, difluoroethane, pentafluoroethane, trifluoroethane, dichlorotetrafluoroethane, trichlorotrifluoroethane, tetrachlorodifluoroethane, and perfluorocyclobutane), inorganic gases (such as carbon dioxide, nitrogen, and air), and water.

<Method for producing resin composition>

The resin compositions according to the present invention can be produced using the components described above based on methods conventionally known as methods for producing resin compositions.

The resin composition is obtained, for example, through mixing and melt-kneading the components.

The timing of mixing and melt-kneading can be appropriately set depending on the molding methods (such as extrusion molding, injection molding, and vacuum molding) to be adopted. For example, the mixing may be performed before feeding from the hopper of the molding machine or at the same time as molding.

Melting and kneading may be performed, for example, by a twin-screw kneader.

The resin composition according to the present invention may be in any form as long as the resin composition can be molded and processed.

The form of the resin composition according to the present invention may be, for example, in the form of pellets having any sizes and shapes.

The shape of the pellets is not particularly limited. For example, the shape may be cylinder, sphere, or ellipsoidal sphere.

The size of the pellets is not particularly limited. For example, in the case of the spherical pellets, the diameter may be 1 mm to 10 mm. In the case of the ellipsoidal spherical pellets, the pellets may have an aspect ratio of 0.1 to 1.0 and may have longitudinal and lateral lengths of 1 mm to 10 mm. In the case of the cylindrical pellets, the diameter may be 1 mm to 10 mm and the length may be 1 mm to 10 mm.

The resin composition according to the present invention can be dried, if necessary, and thereafter molded to provide a desired molded product.

<Molded product>

The molded product according to the present invention is obtained by molding the resin composition according to the present invention by any molding method.

The molded product according to the present invention may be in any shape depending on the application and the like.

The molded products according to the present invention may be, for example, films, sheets, container products (such as food containers), daily necessities (such as various disposable products), automotive parts, electric and electronic parts, and various consumable products (such as those in the field of construction materials).

The resin composition according to the present invention is particularly suitable for inflation molding or extrusion molding because of excellent molding processability. Therefore, the molded product according to the present invention is preferably inflation-molded products or extrusion-molded products.

Examples of the inflation-molded products include films, sheets, and bags (such as plastic bags).

The wall thickness of the inflation-molded product is not particularly limited and is preferably 10 um to 200 um and further preferably 30 um to 100 $\mu$m.

Examples of the extrusion-molded products include films, sheets, and hollow products.

<Method for producing molded product>

The method for producing the molded product can be appropriately selected depending on the molded product to be obtained.

Examples of the methods for producing the molded products according to the present invention include inflation molding methods, extrusion molding methods, injection molding methods, foam injection molding methods, injection compression molding methods, blow molding methods, press molding methods, calender molding methods, and vacuum molding methods.

Molding conditions can be appropriately set depending on the composition of the resin composition, the kind of the molded product, and the like.

In the case where the molded product is a film or a sheet, the molded product may be stretched or may not be stretched in a uniaxial, biaxial, or multiaxial direction at the time of the molding or after the molding.

Examples

Hereinafter, the present invention will be further specifically described with reference to Examples. The present invention, however, is not limited to these Examples.

<Preparation of resin composition>

Resin compositions including each component listed in Tables 1 to 6 were prepared. The unit of composition values in Tables is "% by mass".

In Tables, the term "Lubricant:Dispersing agent" means the mass ratio of a lubricant to a dispersing agent in the resin composition.

The term "Zn Stearate:Stearic acid" means the mass ratio of zinc stearate to stearic acid lubricant in the resin composition.

The details of each component in the resin composition are as follows. The term "average particle diameter" refers to a value calculated from the measurement result of a specific surface area by an air permeation method in accordance with JIS M-8511 using a specific surface area measuring apparatus Type SS-100 manufactured by Shimadzu Corporation.

(Polyethylene-based resin)

Polyethylene-based resin-1: A mixture including high-density polyethylene and linear low-density polyethylene in the ratio of High-density polyethylene:Linear low-density polyethylene (mass ratio) = 95.0:5.0

Polyethylene-based resins-2: High-density polyethylene alone

Polyethylene-based resins-3: Linear low-density polyethylene alone

The above high-density polyethylene has an MFR (190°C, 21.6 kg) in accordance with JIS K 6922-1 (ISO 1133) of 10 g/10 min.

The above linear low-density polyethylene has an MFR (190°C, 2.16 kg) in accordance with JIS K 6922-1 (ISO 1133) of 1.0 g/10 min.

(Inorganic substance powder)

Heavy calcium carbonate particles (average particle diameter: 2.2 um, no surface treatment)

(Lubricant)

Zn Stearate: Zinc Stearate
Mg stearate: Magnesium stearate
Stearamide

(Dispersing agent)

Stearic acid
Na polyacrylate: Sodium polyacrylate

<Preparation of inflation-molded product>

A film was prepared as an inflation-molded product.

Specifically, a film having a thickness of 30 $\mu$m was prepared using an inflation film extrusion line (circular die having a diameter of 60 mm, a die gap of 1.2 mm, a screw diameter of 30 mm, LID ratio = 30). The film was treated with a BUR (Blow-Up Ratio) of 2.5.

In the extruder, the temperature in each zone was set to 180°C to 200°C and the number of rotation was maintained at 20 rpm.

<Various evaluations>

The molding processability of each resin composition at the time of molding the inflation-molded product and the appearance of each obtained molded product were evaluated by the following methods. The results are listed in Tables 1 to 6.

(Molding processability)

The ease of molding (ease of blowing in this example) of each of the resin compositions was evaluated by visual observation of the appearance of blowing in accordance with the following criteria.

A: Remarkably easy to blow.
B: Not so remarkably easy as A, but easy to blow.
C: Relatively difficult to blow.
D: Difficult to blow.

(Appearance of molded product)

The appearance of the molded products obtained from each of the resin compositions was visually observed and evaluated in accordance with the following criteria.

A: Remarkably smooth and excellent appearance.
B: Not so remarkably smooth as A, but smooth appearance.
C: Slight surface irregularities are observed.

D: Many surface irregularities are observed.

[Table 1]

| | | Comparative Example 1-1 | Example 1-1 | Example 1-2 | Comparative Example 1-2 | Comparative Example 1-3 | Comparative Example 1-4 | Comparative Example 1-5 | Comparative Example 1-6 | Example 1-3 | Example 1-4 |
|---|---|---|---|---|---|---|---|---|---|---|---|
| Polyethylene-based resin-1 | | 70 | 70 | 70 | 70 | 70 | 70 | 70 | 70 | 70 | 70 |
| Inorganic substance powder | | 28 | 28 | 28 | 28 | 28 | 28 | 28 | 28 | 28 | 28 |
| Lubricant | Zn Stearate | 0.2 | 0.2 | 0.2 | 0.2 | 0.2 | | | | 0.2 | 0.3 |
| | Mg Stearate | | | | | | 0.2 | | | | |
| | Stearamide | | | | | | | 0.2 | 0.2 | 0.1 | |
| Dispersing agent | Stearic acid | 0.2 | 0.4 | 0.8 | 1.2 | | 0.4 | 0.4 | | 0.4 | 0.9 |
| | Na Polyacrylate | | | | | 0.4 | | | 0.4 | | 0.1 |
| Polyethylene-based wax | | 1.6 | 1.4 | 1.0 | 0.6 | 1.4 | 1.4 | 1.4 | 1.4 | 1.3 | 0.8 |
| Lubricant:Dispersing agent (Zn Stearate:Stearic acid) | | 1:1 (1:1) | 1:2 (1:2) | 1:4 (1:4) | 1:6 (1:6) | 1:2 (-) | 1:2 (-) | 1:2 (-) | 1:2 (-) | 3:4 (1:2) | 3:10 (1:3) |
| Molding processability | | D | A | A | C | C | C | C | C | A | A |
| Appearance of molded product | | C | A | A | C | C | C | C | C | A | A |

EP 4 321 571 A1

12

[Table 2]

| | | Comparative Example 2-1 | Example 2-1 | Example 2-2 | Comparative Example 2-2 | Comparative Example 2-3 | Comparative Example 2-4 | Comparative Example 2-5 | Comparative Example 2-6 | Example 2-3 | Example 2-4 |
|---|---|---|---|---|---|---|---|---|---|---|---|
| Polyethylene-based resin-1 | | 30 | 30 | 30 | 30 | 30 | 30 | 30 | 30 | 30 | 30 |
| Inorganic substance powder | | 58 | 58 | 58 | 58 | 58 | 58 | 58 | 58 | 58 | 58 |
| Lubricant | Zn Stearate | 0.2 | 0.2 | 0.2 | 0.2 | 0.2 | | | | 0.2 | 0.3 |
| | Mg Stearate | | | | | | 0.2 | | | | |
| | Stearamide | | | | | | | 0.2 | 0.2 | 0.1 | |
| Dispersing agent | Stearic acid | 0.2 | 0.4 | 0.8 | 1.2 | | 0.4 | 0.4 | | 0.4 | 0.9 |
| | Na Polyacrylate | | | | | 0.4 | | | 0.4 | | 0.1 |
| Polyethylene-based wax | | 1.6 | 1.4 | 1.0 | 0.6 | 1.4 | 1.4 | 1.4 | 1.4 | 1.3 | 0.8 |
| Lubricant:Dispersing agent (Zn Stearate:Stearic acid) | | 1:1 (1:1) | 1:2 (1:2) | 1:4 (1:4) | 1:6 (1:6) | 1:2 (-) | 1:2 (-) | 1:2 (-) | 1:2 (-) | 3:4 (1:2) | 3:10 (1:3) |
| Molding processability | | D | A | A | C | C | C | C | C | A | A |
| Appearance of molded product | | C | A | A | C | C | C | C | C | A | A |

[Table 3]

| | | Comparative Example 3-1 | Example 3-1 | Example 3-2 | Comparative Example 3-2 | Comparative Example 3-3 | Comparative Example 3-4 | Comparative Example 3-5 | Comparative Example 3-6 | Example 3-3 | Example 3-4 |
|---|---|---|---|---|---|---|---|---|---|---|---|
| Polyethylene-based resin-2 | | 70 | 70 | 70 | 70 | 70 | 70 | 70 | 70 | 70 | 70 |
| Inorganic substance powder | | 28 | 28 | 28 | 28 | 28 | 28 | 28 | 28 | 28 | 28 |
| Lubricant | Zn Stearate | 0.2 | 0.2 | 0.2 | 0.2 | 0.2 | | | | 0.2 | 0.3 |
| | Mg Stearate | | | | | | 0.2 | | | | |
| | Stearamide | | | | | | | 0.2 | 0.2 | 0.1 | |
| Dispersing agent | Stearic acid | 0.2 | 0.4 | 0.8 | 1.2 | | 0.4 | 0.4 | | 0.4 | 0.9 |
| | Na Polyacrylate | | | | | 0.4 | | | 0.4 | | 0.1 |
| Polyethylene-based wax | | 1.6 | 1.4 | 1.0 | 0.6 | 1.4 | 1.4 | 1.4 | 1.4 | 1.3 | 0.8 |
| Lubricant:Dispersing agent (Zn Stearate:Stearic acid) | | 1:1 (1:1) | 1:2 (1:2) | 1:4 (1:4) | 1:6 (1:6) | 1:2 (-) | 1:2 (-) | 1:2 (-) | 1:2 (-) | 3:4 (1:2) | 3:10 (1:3) |
| Molding processability | | D | A | A | C | C | C | C | C | B | B |
| Appearance of molded product | | C | A | A | C | C | C | C | C | A | A |

EP 4 321 571 A1

[Table 4]

| | | Comparative Example 4-1 | Example 4-1 | Example 4-2 | Comparative Example 4-2 | Comparative Example 4-3 | Comparative Example 4-4 | Comparative Example 4-5 | Comparative Example 4-6 | Example 4-3 | Example 4-4 |
|---|---|---|---|---|---|---|---|---|---|---|---|
| Polyethylene-based resin-2 | | 30 | 30 | 30 | 30 | 30 | 30 | 30 | 30 | 30 | 30 |
| Inorganic substance powder | | 58 | 58 | 58 | 58 | 58 | 58 | 58 | 58 | 58 | 58 |
| Lubricant | Zn Stearate | 0.2 | 0.2 | 0.2 | 0.2 | 0.2 | | | | 0.2 | 0.3 |
| | Mg Stearate | | | | | | | | | 0.1 | |
| | Stearamide | | | | | | 0.2 | 0.2 | 0.2 | | |
| | Stearic acid | 0.2 | 0.4 | 0.8 | 1.2 | | 0.4 | 0.4 | | 0.4 | 0.9 |
| Dispersing agent | Na Polyacrylate | | | | | 0.4 | | | 0.4 | | 0.1 |
| Polyethylene-based wax | | 1.6 | 1.4 | 1.0 | 0.6 | 1.4 | 1.4 | 1.4 | 1.4 | 1.3 | 0.8 |
| Lubricant:Dispersing agent (Zn Stearate:Stearic acid) | | 1:1 (1:1) | 1:2 (1:2) | 1:4 (1:4) | 1:6 (1:6) | 1:2 (-) | 1:2 (-) | 1:2 (-) | 1:2 (-) | 3:4 (1:2) | 3:10 (1:3) |
| Molding processability | | D | A | A | C | C | C | C | C | B | B |
| Appearance of molded product | | C | A | A | C | C | C | C | C | A | A |

[Table 5]

| | Comparative Example 5-1 | Example 5-1 | Example 5-2 | Comparative Example 5-2 | Comparative Example 5-3 | Comparative Example 5-4 | Comparative Example 5-5 | Comparative Example 5-6 | Example 5-3 | Example 5-4 |
|---|---|---|---|---|---|---|---|---|---|---|
| Polyethylene-based resin-3 | 70 | 70 | 70 | 70 | 70 | 70 | 70 | 70 | 70 | 70 |
| Inorganic substance powder | 28 | 28 | 28 | 28 | 28 | 28 | 28 | 28 | 28 | 28 |
| Lubricant / Zn Stearate | 0.2 | 0.2 | 0.2 | 0.2 | 0.2 | | | | 0.2 | 0.3 |
| Lubricant / Mg Stearate | | | | | | 0.2 | | | | |
| Lubricant / Stearamide | | | | | | | 0.2 | 0.2 | 0.1 | |
| Dispersing agent / Stearic acid | 0.2 | 0.4 | 0.8 | 1.2 | | 0.4 | 0.4 | | 0.4 | 0.9 |
| Dispersing agent / Na Polyacrylate | | | | | 0.4 | | | 0.4 | | 0.1 |
| Polyethylene-based wax | 1.6 | 1.4 | 1.0 | 0.6 | 1.4 | 1.4 | 1.4 | 1.4 | 1.3 | 0.8 |
| Lubricant:Dispersing agent (Zn Stearate:Stearic acid) | 1:1 (1:1) | 1:2 (1:2) | 1:4 (1:4) | 1:6 (1:6) | 1:2 (-) | 1:2 (-) | 1:2 (-) | 1:2 (-) | 3:4 (1:2) | 3:10 (1:3) |
| Molding processability | D | A | A | C | C | C | C | C | B | B |
| Appearance of molded product | C | A | A | C | C | C | C | C | A | A |

EP 4 321 571 A1

16

[Table 6]

| | | Comparative Example 6-1 | Example 6-1 | Example 6-2 | Comparative Example 6-2 | Comparative Example 6-3 | Comparative Example 6-4 | Comparative Example 6-5 | Comparative Example 6-6 | Example 6-3 | Example 6-4 |
|---|---|---|---|---|---|---|---|---|---|---|---|
| Polyethylene-based resin-3 | | 30 | 30 | 30 | 30 | 30 | 30 | 30 | 30 | 30 | 30 |
| Inorganic substance powder | | 58 | 58 | 58 | 58 | 58 | 58 | 58 | 58 | 58 | 58 |
| Lubricant | Zn Stearate | 0.2 | 0.2 | 0.2 | 0.2 | 0.2 | | | | 0.2 | 0.3 |
| | Mg Stearate | | | | | | 0.2 | | | | |
| | Stearamide | | | | | | | 0.2 | 0.2 | 0.1 | |
| | Stearic acid | 0.2 | 0.4 | 0.8 | 1.2 | | 0.4 | 0.4 | | 0.4 | 0.9 |
| Dispersing agent | Na Polyacrylate | | | | | 0.4 | | | 0.4 | | 0.1 |
| Polyethylene-based wax | | 1.6 | 1.4 | 1.0 | 0.6 | 1.4 | 1.4 | 1.4 | 1.4 | 1.3 | 0.8 |
| Lubricant:Dispersing agent (Zn Stearate:Stearic acid) | | 1:1 (1:1) | 1:2 (1:2) | 1:4 (1:4) | 1:6 (1:6) | 1:2 (-) | 1:2 (-) | 1:2 (-) | 1:2 (-) | 3:4 (1:2) | 3:10 (1:3) |
| Molding processability | | D | A | A | C | C | C | C | C | B | B |
| Appearance of molded product | | C | A | A | C | C | C | C | C | A | A |

As listed in each Table, the molded products obtained from the resin compositions satisfying the requirements of the present invention had excellent molding processability and appearance of the molded products.

Such effects tended to be more easily exhibited in the case where the mixture of the high-density polyethylene and the linear low-density polyethylene was used as the polyethylene-based resin.

Although data are not listed, the molded products obtained from the resin compositions satisfying the requirements of the present invention also had excellent mechanical properties (such as tensile strength and elongation).

On the other hand, with respect to the molded products obtained from the resin compositions that did not include either or both of zinc stearate and stearic acid and the resin compositions of which blending ratio did not satisfy the requirements of the present invention, either or both of the molding processability and the appearance of the molded products were deteriorated.

In the above test, the case where talc was used as the "inorganic substance powder" instead of heavy calcium carbonate particles exhibited similar trends as described above.

In the above test, in the case where heavy calcium carbonate (no surface treatment) having an average particle diameter of 10.0 um was used as the "inorganic substance powder", the appearance of the molded product tended to be deteriorated as a whole. However, the evaluation results for the resin compositions that satisfied the requirements of the present invention were all "B" or better.

In the above tests, in the case where the polyethylene-based wax was not blended, the molding processability tended to be deteriorated as a whole. However, the evaluation results for the resin compositions that satisfied the requirements of the present invention were all "B" or better.

In the above test, the same trends were observed even when extrusion-molded products were prepared instead of the inflation-molded products as the molded products.

**Claims**

1. A resin composition comprising:

   a polyethylene-based resin, an inorganic substance powder, zinc stearate, and stearic acid, wherein
   a mass ratio of the polyethylene-based resin and the inorganic substance powder is 10:90 to 90:10;
   a content of the zinc stearate is 0.05% by mass or more and 0.60% by mass or less relative to the resin composition;
   a content of the stearic acid is 0.10% by mass or more and 1.20% by mass or less relative to the resin composition; and
   a mass ratio of the zinc stearate and the stearic acid is 1:1.5 to 1:4.

2. The resin composition according to claim 1, wherein the polyethylene-based resin comprises

   high-density polyethylene having an MFR (190°C, 21.6 kg) in accordance with JIS K 6922-1 (ISO 1133) of 5 g/10 min or more and 15 g/10 min or less; and
   linear low-density polyethylene having an MFR (190°C, 2.16 kg) in accordance with JIS K 6922-1 (ISO 1133) of 0.5 g/10 min or more and 1.5 g/10 min or less; and
   a mass ratio of the high-density polyethylene and the linear low-density polyethylene is 92.5:7.5 to 99.5:0.5.

3. The resin composition according to claim 1 or 2, further comprising polyethylene-based wax in an amount of 0.15% by mass or more and 1.80% by mass or less relative to the resin composition.

4. The resin composition according to any one of claims 1 to 3, wherein the inorganic substance powder is heavy calcium carbonate.

5. The resin composition according to claim 4, wherein an average particle diameter of the heavy calcium carbonate is 0.7 μm or more and 6.0 um or less.

6. A molded product obtained from the resin composition according to any one of claims 1 to 5.

7. The molded product according to claim 6, wherein the molded product is an inflation-molded product.

8. The molded product according to claim 6, wherein the molded product is an extrusion-molded product.

**EP 4 321 571 A1**

## INTERNATIONAL SEARCH REPORT

International application No.

**PCT/JP2022/010558**

### A. CLASSIFICATION OF SUBJECT MATTER

*C08K 5/09*(2006.01)i; *C08L 23/04*(2006.01)i; *C08K 3/013*(2018.01)i
FI: C08L23/04; C08K3/013; C08K5/09

According to International Patent Classification (IPC) or to both national classification and IPC

### B. FIELDS SEARCHED

Minimum documentation searched (classification system followed by classification symbols)

C08K; C08L23

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 52-146454 A (LION FAT AND OIL CO., LTD.) 06 December 1977 (1977-12-06) claim 1, page 1, right column, lines 9, 10, page 2, lower right column, lines 3-8, page 3, right column, lines 11-13, examples | 1, 2, 4-8 |
| X | JP 4-359941 A (NIPPON PETROCHEM. CO., LTD.) 14 December 1992 (1992-12-14) claim 1, paragraphs [0028], [0032], [0034], example 8, table 1 | 1-8 |
| X | CN 103289179 A (NEW QIAOWEI (FUJIAN) SHOES & CLOTHING CO., LTD.) 11 September 2013 (2013-09-11) abstract, example 4 | 1, 6 |
| A | CN 102558655 A (WULUMUQI JUXING PLASTICS CO., LTD.) 11 July 2012 (2012-07-11) entire text | 1-8 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 May 2022** | **07 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/010558**

| Patent document cited in search report | | | Publication date (day/month/year) | Patent family member(s) | Publication date (day/month/year) |
|---|---|---|---|---|---|
| JP | 52-146454 | A | 06 December 1977 | (Family: none) | |
| JP | 4-359941 | A | 14 December 1992 | (Family: none) | |
| CN | 103289179 | A | 11 September 2013 | (Family: none) | |
| CN | 102558655 | A | 11 July 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001200108 A

- JP 2002020556 A

**Non-patent literature cited in the description**

- *CHEMICAL ABSTRACTS,* 557-05-1

- *CHEMICAL ABSTRACTS,* 57-11-4